# EUROPEAN PATENT SPECIFICATION

(11) **EP 0 421 421 B1**
(45) Date of publication and mention of the grant of the patent: **18.01.1995**
(21) Application number: 90119051.2
(22) Date of filing: 04.10.1990
(51) Int. Cl.: H01M 4/58, H01M 4/48, H01M 10/40

(54) **Non aqueous electrolyte secondary battery**
Sekundärbatterie mit nichtwässrigem Elektrolyten
Batterie secondaire à électrolyte non-aqueux

(30) Priority: 06.10.1989 JP 262430/89
(43) Date of publication of application: 10.04.1991
(73) Proprietor: MATSUSHITA ELECTRIC INDUSTRIAL CO., LTD., Kadoma-shi, Osaka-fu, 571 (JP)
(72) Inventor: Toyoguchi, Yoshinori, Yao City, 581 (JP)
(74) Representative: Jung, Elisabeth, Dr.

(56) References cited:
- EP-A- 0 017 400
- EP-A- 0 243 926
- JP-A-63 210 028
- US-A- 4 567 031
- PATENT ABSTRACTS OF JAPAN, vol. 12, no. 500 (E-699)[3347], 27th December 1988; & JP-A-63 211 564 (HITACHI MAXELL) 02-09-1988
- CHEMICAL ABSTRACTS, vol. 112, no. 18, 30th April 1990, page 235, abstract no.162253t, Columbus, Ohio, US; & JP-A-1 294 358 (HITACHI MAXELL) 28-11-1989
- "An approach to Secondary Nonaqueous Lithium Cell. (I) Synthesis and characterisation of LiMnO(2)", Ohzuku et al, 33rd Battery Symposium, Rikkyo University, Japan, September 1992

## Description

### 1. FIELD OF THE INVENTION

The present invention relates to an improvement of nonaqueous electrolyte secondary batteries, and particularly to an improvement of cathode active material.

Nonaqueous electrolyte secondary batteries using lithium or lithium compound as an anode are expected to have high voltage and high energy density, and therefore, many researches have been made. Especially, MnO₂ and TiS₂ are investigated for use as cathode active material of those batteries. Recently, Mizushima et al. reported that LiCoO₂ can be used as the cathode active material (Material Research Bulletin Vol.15, pp. 783--789, 1980).

LiCoO₂ has a hexagonal crystal lattice. In case that LiCoO₂ is used as the cathode active material of battery, the battery shows a one-stage discharge curve when it is charged up to 4.5 volt and discharged continuously to 2 volt. Discharge voltage of the battery is relatively high at about 4 volt, and therefore, it is considered that LiCoO₂ is promising as the cathode active material. When the battery using LiCoO₂ is being charged, Li comes out from the LiCoO₂ crystal and enters into the electrolyte as Li⁺-ion. Therefore, the cathode active material during the charging state can be represented by "LiₓCoO₂, wherein x decreases from 1 toward 0, namely 0 < x < 1". On the contrary, when the battery is being discharged, a reaction which is reverse to that of the charging takes place, and Li⁺-ions in the electrolyte come out and enter into the LiCoO₂ crystal.

However, there is a problem in respect of the cycle life of the cathode active material in the non-aqueous electrolyte secondary battery using LiCoO₂ as cathode active material. That is, when the charge-discharge cycle is repeated, the discharge capacity remarkably deteriorates.

### OBJECT AND SUMMARY OF THE INVENTION

The object of the present invention is to improve the cycle life of a nonaqueous electrolyte secondary battery using LiCoO₂ as cathode active material by improving the cathode active material.

This object is accomplished by a nonaqueous electrolyte secondary battery which comprises:
an anode containing lithium or a lithium compound,
a nonaqueous electrolyte containing a lithium compound, and,
a cathode having a cathode active material represented by the expression:

Li_{X}Co_{(1-Y)}M_{Y}O₂

wherein X and Y are defined as follows:

0.85 ≦ X ≦ 1.3,

0.05 ≦ Y ≦ 0.35,

wherein M is a metal of at least one member selected from the group consisting of W, Ta, Ti and Nb.

LiCoO₂ has a hexagonal crystal lattice and on charging Li⁺-ions come out from the crystal and on discharging enter into the crystal. The inventors conceived that the improvement of the cycle life of the battery is effected by replacing a part of Co by other metal components to stabilize the crystal and using this crystal as the cathode active material. Then, the inventors made various experiments with respect to various metals and found that W, Ta, Ti and Nb are effective as the metals to replace Co. By observing LiCoO₂ wherein a part of Co is replaced by an other metal with X ray diffraction microscopy, it is found that the lattice constants become smalled in the hexagonal crystal lattice. This also applies when Mn is used as modifying metal component. The observed lattice constants of LiCoO₂ are : a₀ = 0.2812nm, C₀ = 1.4051nm, and the observed lattice constants of LiCo_{O.9}Mn_{0.1}O₂ are as follows : a₀ = 0.2803nm, C₀ = 1.4006nm. These results would correspond to an improvement of the cycle life.

The cycle life of a battery is therefore also improved by using a material represented by the expression Li_{X}Co_{(1-Y)} Mn_{y}O₂ (0.85 ≦ X ≦1.3, 0.05 ≦ Y ≦ 0.35,) with the proviso that said cathode active material has smaller lattice constants than that of LiCoO₂. JP-A-63, 210, 0281 discloses cathode materials such as LiMn_{(1-y)} Co_{y}O₂ where 0.1 ≦ y < 1, LiMn_{0.3}Co_{0.7}O₂, LiMn_{0.2}Co_{0.8}O₂ and LiMn_{0,7}Co_{0,3}O₂ for a lithium battery which have lattice constants greater than that of LiCoO₂. The latter compound is synthesized by heating a mixture composed of coprecipitate of carbonates of cobalt and manganese, and lithium carbonate.

The invention will be better understood and appreciated, from the following detailed description taken in conjunction with the drawings.

### BRIEF DESCRIPTION OF THE DRAWING

FIG.1 is a characteristic diagram showing the discharge capacity at each cycle of batteries embodying the present invention and the conventional battery (comparison example 1).

FIG.2 is a vertical sectional view showing a battery used in experiments.

FIG.3 is a diagram showing the relationship between the discharge capacity deterioration rate and the value of Y in LiCo_{(1-Y)}M_{Y}O₂ (for M = W)

FIG.4 is a diagram showing the relationship between the discharge capacity deterioration rate and the value of X in LiₓCo_{0.9}Mn_{0.1}O₂ and the relationship between the discharge capacity at the first cycle as a battery with the value of X in LiₓCo_{0.9}Mn_{0.1}O₂.

It will be recognized that some or all of the Figures are schematic representations for the purposes of illustration and do not necessarily depict the actual relative sizes or locations of the elements shown.

### DESCRIPTION OF THE PREFERRED EMBODIMENTS

### [Example 1]

### Preparation of LiCoO₂ (comparison example 1)

LiCoO₂ is prepared by mixing Li₂CO₃ and CoCO₃ at a ratio of 1 mole Li₂CO₃ : 2 mole CoCO₃, followed by heating the mixture at 900°C for 10 hours.

### Preparation of LiₓCo_{(1-Y)}M_{Y}O₂ (M = W, Mn, Ta, Ti, Nb)

Li_{X}Co_{(1-Y)}M_{Y}O₂ is prepared by mixing Li₂CO₃, CoCO₃ and at least one oxide of W, Mn, Ta, Ti, Nb at a predetermined ratio (Li atom = X mole, Co atom = 1-Y mole, M atom = Y mole), followed by heating the mixture at 900°C for 10 hours.

### Fabrication of a battery

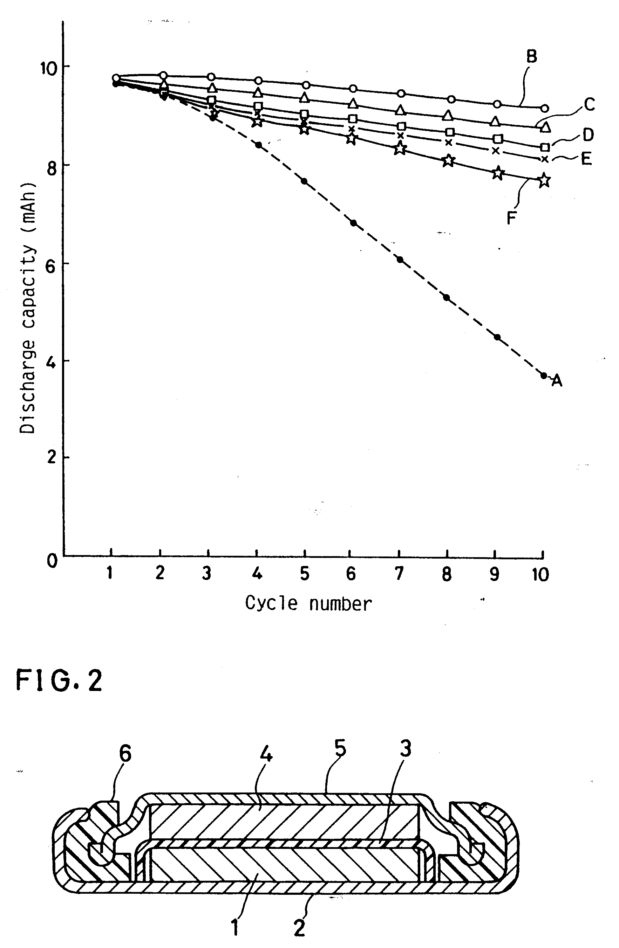

7 parts by weight of LiCoO₂, or Li_{X}Co_{(1-Y)}M_{Y}O₂ as cathode active material, 2 parts by weight of acetylene black as conductive material and 1 part by weight of polytetrafluoroethylene resine as binding agent are mixed, thereby making a mixed cathode material. Then, 0.1g of the mixed cathode material is put into a mold having a 17.5mm diameter and pressed at 1ton/cm² to form a disk-shaped cathode. Next, an explanation is made on the constitution of a battery using the cathode made by the above-mentioned method, with reference to FIG.2. A cathode 1 is put on a case 2. A separator 3 made of porous polypropylene film is put on the cathode 1. Lithium plate 4 as an anode having a 17.5mm diameter and a 0.3mm thickness is put on the separator 3. A sealing plate 5 with gasket (made of polypropylene) 6 is pressed to the upper surface of the lithium plate 4. Nonaqueous electrolyte is made by dissolving lithium perchlorate at a concentration of 1 mol/l in a 1:1 (by volume)-mixed solution of propylene carbonate/dimethoxyethane. The nonaqueous electrolyte is provided on the separator 3 and the anode 4, and thereafter, the battery is sealed.

Batteries prepared by the above-mentioned method are charged to 4.5 volt and discharged to 2 volt at a constant current of 2mA and the cycle of the charge and the discharge is repeated. FIG.1 shows the relationship between the cycle number and the discharge capacity of the batteries wherein LiCo_{0.9}M_{0.1}O₂ prepared by replacing 10% of Co by another metal and LiCoO₂ (comparison example 1) are used as the cathode active material. In FIG.1 a curve A shows comparison example 1 of LiCoO₂, and respective curves B, C, D, E and F show the cathode active material of the present invention, wherein compositions LiCo_{0.9}M_{0.1}O₂ prepared by replacing 10% of Co in LiCoO₂ by W, Mn, Ta, Ti and Nb, respectively are used as the cathode active materials. According to FIG.1, it is understood that the cycle life is improved by replacing a part of Co in LiCoCO₂ by W, Mn, Ta, Ti, Nb.

In order to represent the state of the cycle life numerically, a value defined by the following expression is used as the discharge capacity deterioration rate R based on cycle:$\text{R =} \frac{\text{P-Q}}{\text{P}}$
wherein
P: discharge capacity at the second cycle
Q: discharge capacity at the tenth cycle.
It is to be understood that the smaller the value R of the deterioration rate is, the better the cycle life is.

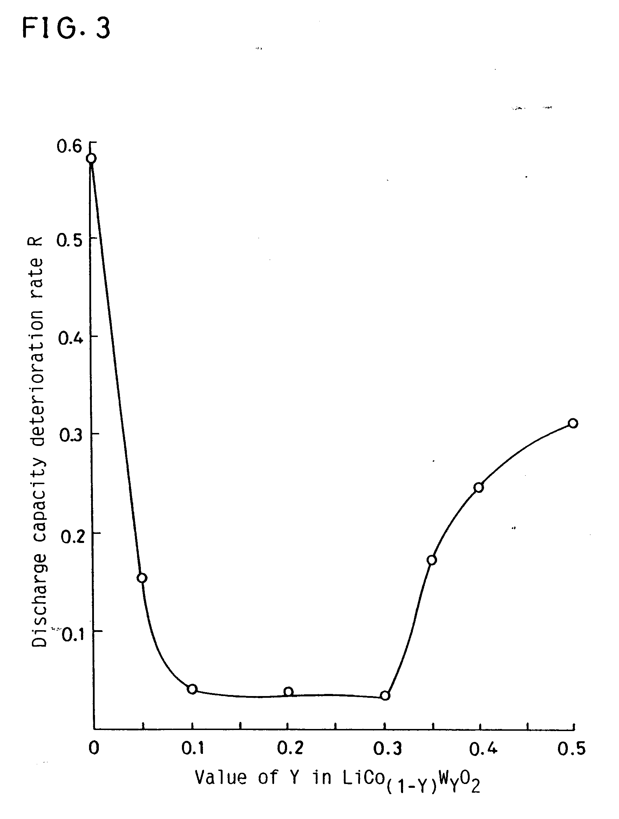

FIG.3 shows the relationship between the discharge capacity deterioration rate and the value of Y in the expression LiCo_{(1-Y)}W_{Y}O₂. That is, in the above-mentioned expression, a part of Co in LiCoO₂ is replaced by W, and the replacing ratio is shown by Y. As shown in FIG.3, in the compositional range 0.05 ≦ Y ≦ 0.35, the cycle life was good. However, when Y is more than 0.35, the X ray diffraction pattern of the cathode active material showed peaks remarkably different to LiCoO₂ and the cycle life also deteriorates. Similar results were also obtained by using Mn, Ta, Ti and Nb in the place of W.

Then, the cycle life was examined in respect of compositions Li_{X}Co_{0.9}Mn_{0.1}O₂ wherein a part of Co was replaced by Mn, and the Li amount was also changed.

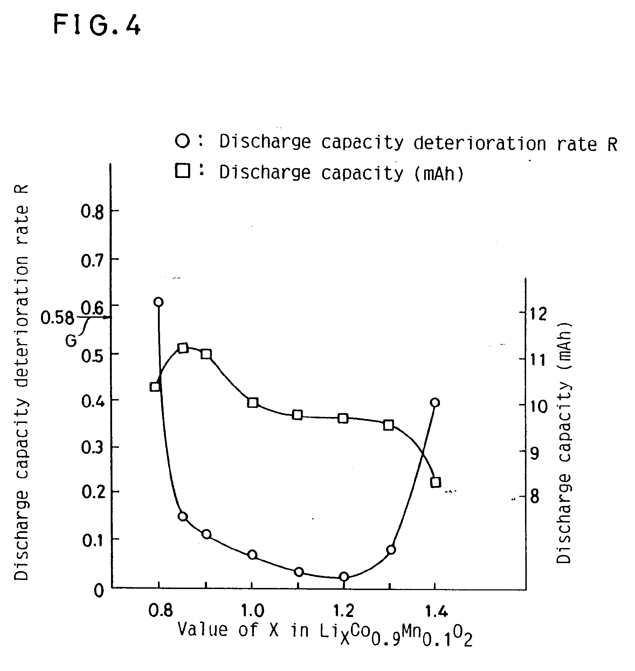

FIG.4 shows the relationship between the discharge capacity at the first cycle and the discharge capacity deterioration rate R based on cycle both as regards the value X in the above-mentioned expression Li_{X}Co_{0.9}Mn_{0.1}O₂. In FIG.4, an arrow G shows "0.58" which is the value of the discharge capacity deterioration rate R of LiCoO₂, which is the comparison example 1 as the conventional cathode active material. From FIG.4, in the compositional ranges X < 0.85 and X > 1.3, it is shown that the influence of replacing a part of Co by Mn was small. And in the compositional range 0.85 ≦ X ≦ 1.3, it is shown that the effect of replacing a part of Co by Mn was significant. That is, the cycle life is improved remarkably.

Further in the compositional range 0.85 ≦ X < 1, a unique effect is shown in addition to the improved cycle life. That is, the discharge capacity at the first cycle which is the discharge capacity before causing discharge capacity deterioration, was increased over the value of the discharge capacity in the range X ≧ 1.

The inventors examined numerous kinds of metals M in replacing a part of Co instead of above-mentioned Mn. They found that some metal e.g. W, Ta, Ti, Nb show improved cycle life similarly to Mn. Furthermore, as to each metal M (including Mn) showing improved cycle life, in order to obtain a suitable amount of M and Li, the discharge capacity deterioration rate R is measured according as the amount of M and Li are changed respectively. That is, the discharge capacity deterioration rate R of a cathode active material which is expressed by the formula Li_{X}Co_{(1-Y)}M_{Y}O₂ is measured for various values X and Y.

The following Table 1 shows the discharge capacity deterioration rate R of Li_{X}Co_{(1-Y)}M_{Y}O₂ (in case M is W(tungsten)).

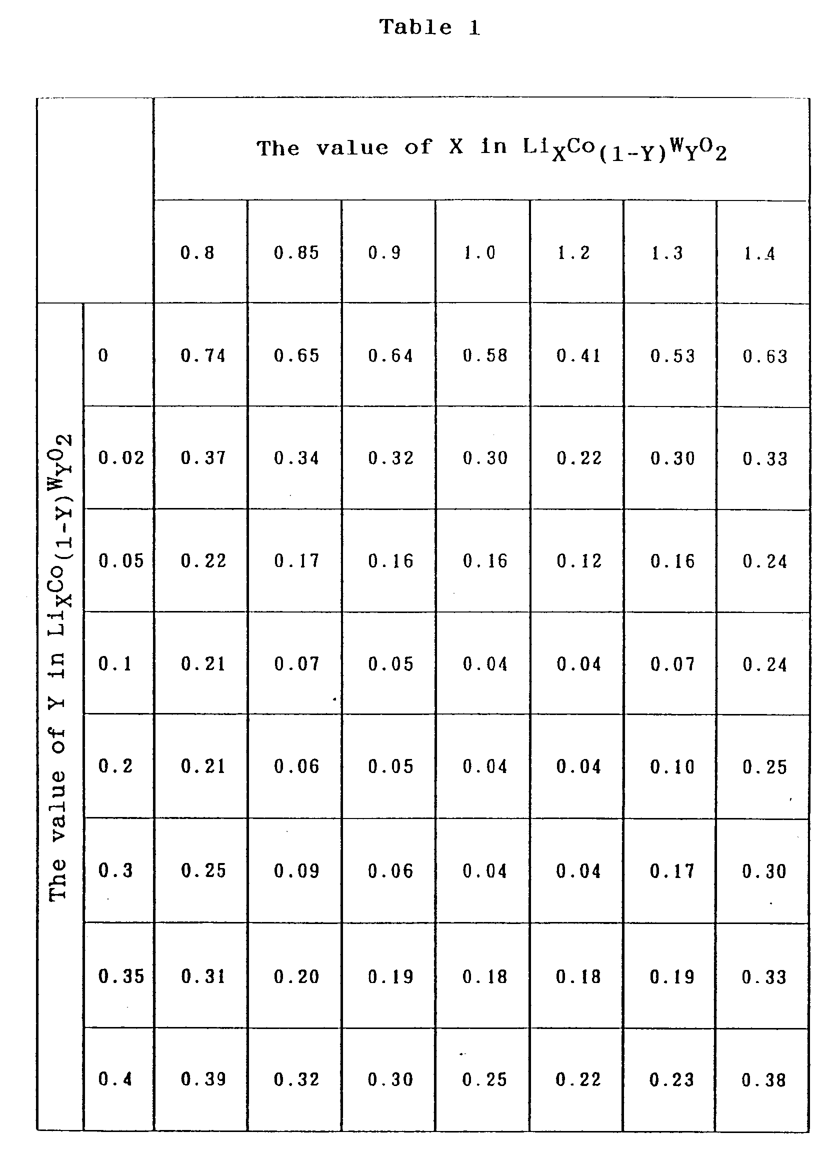

The following Table 2 shows the discharge capacity deterioration rate R of Li_{X}Co_{(1-Y)}M_{Y}O₂ (in case M is Mn(manganese)).

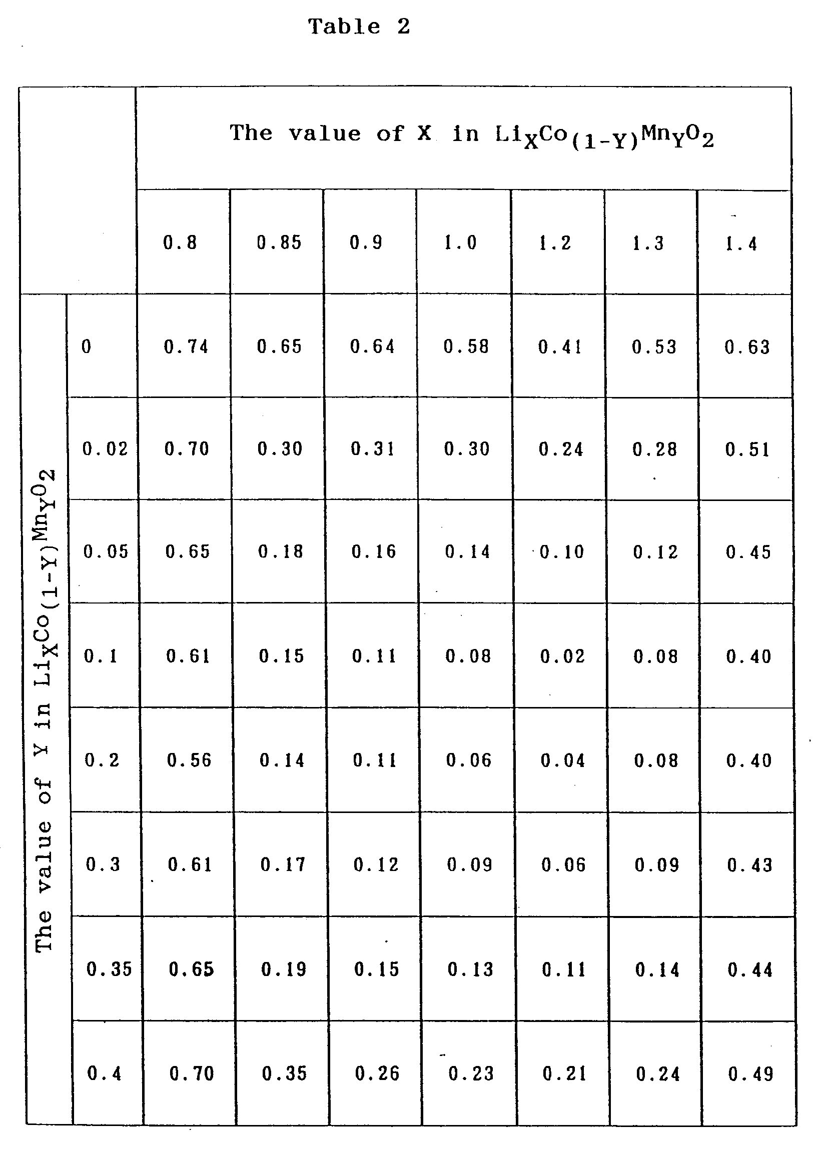

The following Table 3 shows the discharge capacity deterioration rate R of Li_{X}Co_{(1-Y)}M_{Y}O₂ (in case M is Ta(tantalum)).

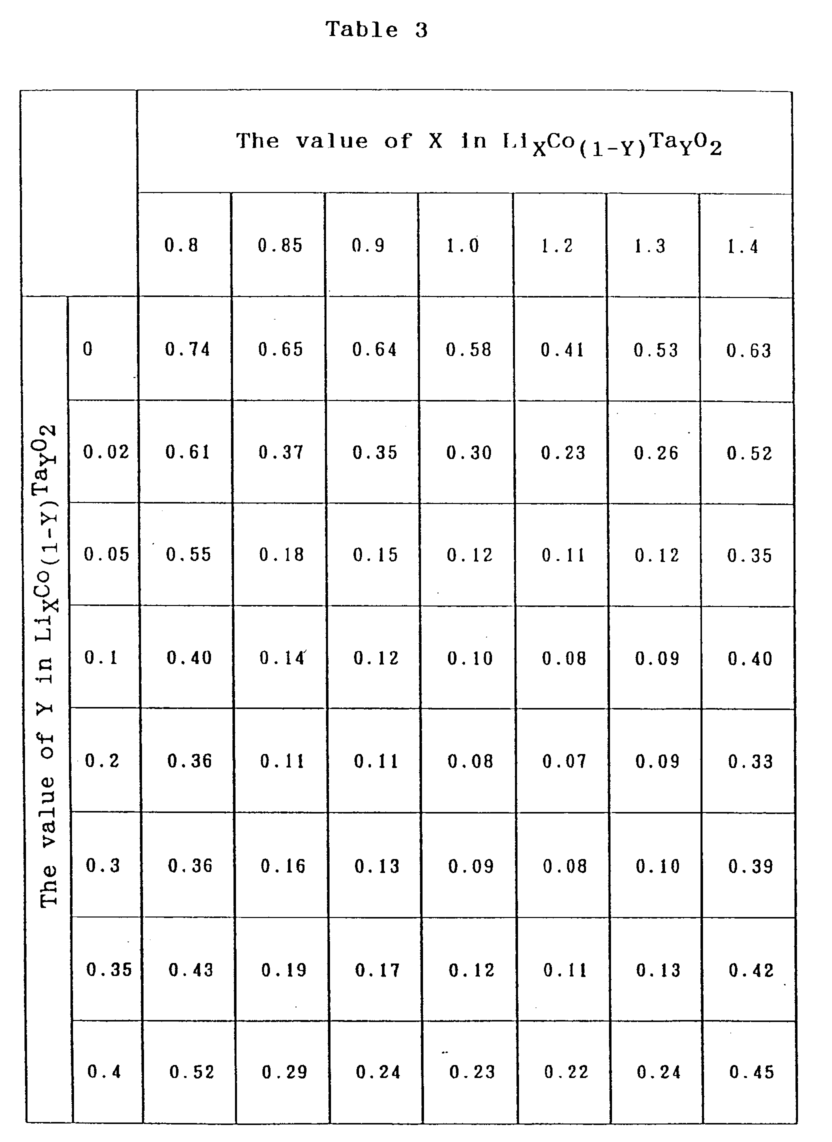

The following Table 4 shows the discharge capacity deterioration rate R of Li_{X}Co_{(1-Y)}M_{Y}O₂ (in case M is Ti(titanium)).

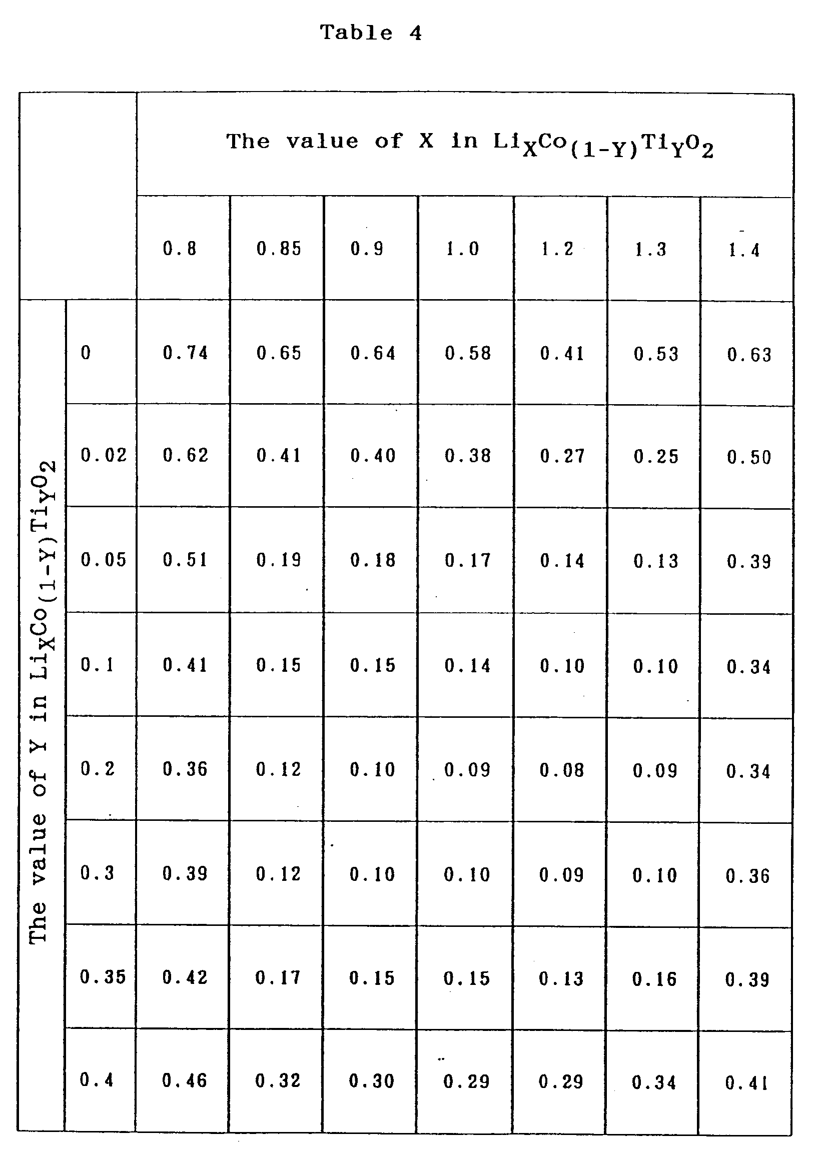

The following Table 5 shows the discharge capacity deterioration rate R of Li_{X}Co_{(1-Y)}M_{Y}O₂ (in case M is Nb(niobium)).

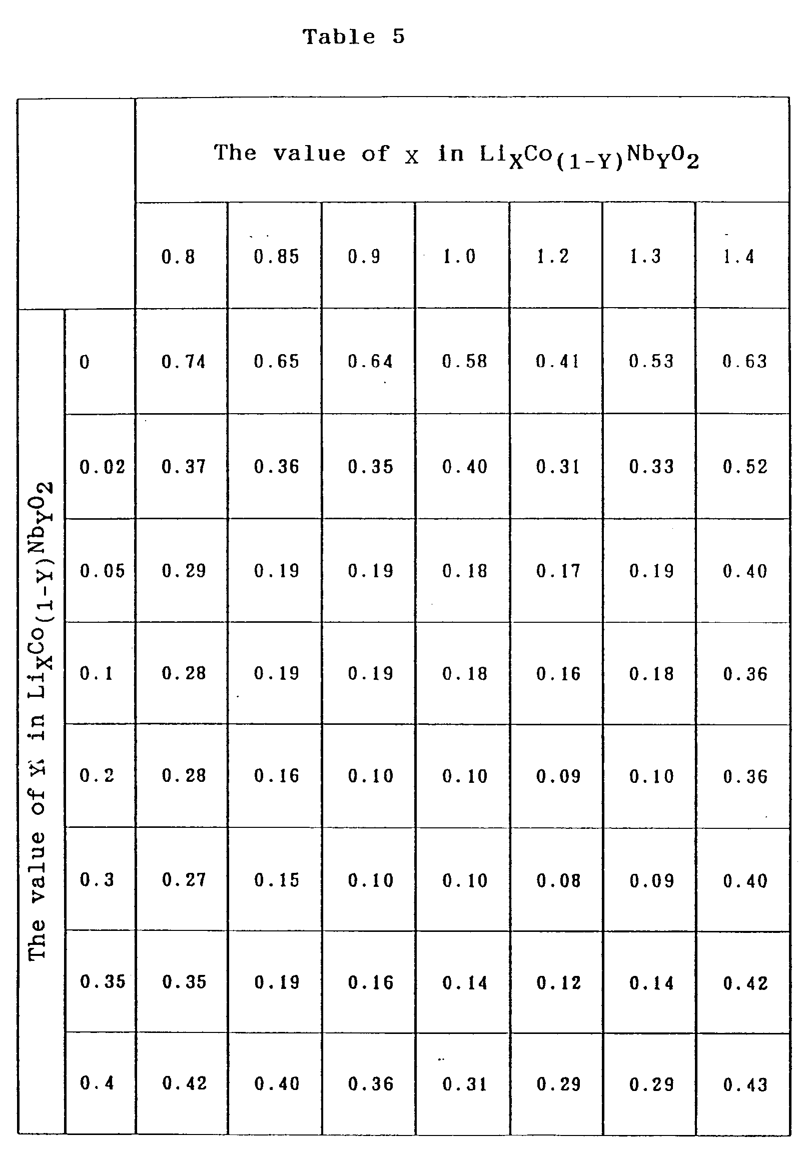

From Tables 1 to 5, it is observed that in the compositional range of 0.85 ≦ X ≦ 1.3 and 0.05 ≦ Y ≦ 0.35, the value of the discharge capacity deterioration rate R of the respective metal was 0.2 or below, and was rather better (smaller) than 0.58 which is the value of the discharge capacity deterioration rate of LiCoO₂ (comparison example 1 as the conventional cathode active material).

Further, from Table 1 (in case M is W), it is observed that in the compositional range of 0.85 ≦ X ≦ 1.3 and 0.1 ≦ Y ≦ 0.3 (which excludes the point of X = 1.3 and Y = 0.3), the value of the discharge capacity deterioration rate R is 0.1 or below, and is better (smaller) than 0.2. That is, a better cycle life was obtained.

From Table 2 and 3 (in case M is Mn or Ta), it is observed that in the compositional range of 1.0 ≦ X ≦ 1.3 and 0.1 ≦ Y ≦ 0.3, the value of the discharge capacity deterioration rate R was 0.1 or below. That is a better cycle life was obtained.

From Table 4 (in case M is Ti), it is observed that in the compositional range of 0.9 ≦ X ≦ 1.3 and 0.1 ≦ Y ≦ 0.3 (which excludes the range of 0.9 ≦ X ≦ 1.0 and Y = 0.1), the value of the discharge capacity deterioration rate R was 0.1 or below. That is, a better cycle life was obtained.

From Table 5 (in case M is Nb), it is observed that in the compositional range of 0.9 ≦ X ≦ 1.3 and 0.2 ≦ Y ≦ 0.3, the value of the discharge capacity deterioration rate R was 0.1 or below. That is, a better cycle life was obtained.

In the above-mentioned embodiments,
a 1:1 (by volume)-mixed solution of propylenecarbonate/ dimethoxyethylene into which lithium perchlorate was dissolved at a concentration of 1 mole/l was used as the nonaqueous electrolyte. However, the nonaqueous electrolyte of the present invention is not limited to the above-mentioned one , and other nonaqueous electrolytes may be used for the present invention. Examples of usable liquid nonaqueous electrolytes include those
prepared by dissolving a lithium salt such as lithium perchlorate (LiClO₄), lithium fluoroborate (LiBF₄) and lithium hexafluorophosphate (LiPF₆) into a solvent such as a carbonate solvent (for example, propylene carbonate, ethylene carbonate), an ether solvent (for example, dimethoxyethane, 2-methyltetrahydrofuran), sulfolane, γ-butyrolactone. Further, a solid electrolyte, such as Li₂SiO₃ can be used as the nonaqueous electrolyte. When these nonaqueous electrolytes are used the battery of the present invention provides the desired effects too. When a Li-Al alloy or WO₂ intercalated with Li is used as the anode instead of Li, the cathode active material of the present invention showed a similarly improved cycle life.

A battery having long cycle life can be obtained by using the cathode active material in accordance with the present invention. However, when the battery is charged for a long time, lithium is excessively pulled out from the cathode active material, thereby introducing deterioration of the cycle life. In case that the composition of the cathode active material is represented by the expression Li_{X}Co_{(1-Y)}M_{Y}O₂, the compositional range must be X ≧ 0.25 at the charged state. When the battery is charged to X < 0.25 a considerable deterioration of the cycle life is observed.

## Claims

1. A nonaqueous electrolyte secondary battery comprising:
an anode containing lithium or lithium compound,
a nonaqueous electrolyte containing lithium compound, and,
a cathode having a cathode active material represented by expression:
Li_{X}Co_{(1-Y)}Mn_{Y}O₂
wherein X and Y are defined as follows:$\text{0.85 ≦ X ≦ 1.3,}$$\text{0.05 ≦ Y ≦ 0.35,}$ wherein M is a metal of at least one member selected from the group consisting of W, Ta, Ti and Nb.

2. A nonaqueous electrolyte secondary battery in accordance with claim 1, wherein
said metal M is W.

3. A nonaqueous electrolyte secondary battery comprising:
an anode containing lithium or lithium compound,
a nonaqueous electrolyte containing lithium compound, and,
a cathode having a cathode active material represented by expression:
Li_{X}Co_{(1-Y)}Mn_{Y}O₂
wherein X and Y are defined as follows:$\text{0.85 ≦ X ≦ 1.3,}$$\text{0.05 ≦ Y ≦ 0.35,}$ said cathode active material having smaller lattice constants than that of LiCoO₂.

4. A nonaqueous electrolyte secondary battery in accordance with claim 1, wherein
said metal M is Ta.

5. A nonaqueous electrolyte secondary battery in accordance with claim 1, wherein
said metal M is Ti.

6. A nonaqueous electrolyte secondary battery in accordance with claim 1, wherein
said metal M is Nb.

7. A nonaqueous electrolyte secondary battery comprising:
an anode containing lithium or lithium compound,
a nonaqueous electrolyte containing lithium compound, and,
a cathode having a cathode active material represented by expression:
Li_{X}Co_{(1-Y)}W_{Y}O₂
wherein X and Y are defined as follows:$\text{0.85 ≦ X ≦ 1.3,}$$\text{0.1 ≦ Y ≦ 0.3,}$ excluding the point of X = 1.3, Y = 0.3.

8. A nonaqueous electrolyte secondary battery comprising:
an anode containing lithium or lithium compound,
a nonaqueous electrolyte containing lithium compound, and,
a cathode having a cathode active material represented by expression:
Li_{X}Co_{(1-Y)}Mn_{Y}O₂
wherein X and Y are defined as follows:$\text{1.0 ≦ X ≦ 1.3,}$$\text{0.1 ≦ Y ≦ 0.3,}$ said cathode active material having smaller lattice constants than that of LiCoO₂.

9. A nonaqueous electrolyte secondary battery comprising:
an anode containing lithium or lithium compound,
a nonaqueous electrolyte containing lithium compound, and,
a cathode having a cathode active material represented by expression:
Li_{X}Co_{(1-Y)}Ta_{Y}O₂
wherein X and Y are defined as follows:$\text{1.0 ≦ X ≦ 1.3,}$$\text{0.1 ≦ Y ≦ 0.3.}$

10. A nonaqueous electrolyte secondary battery comprising:
an anode containing lithium or lithium compound,
a nonaqueous electrolyte containing lithium compound, and,
a cathode having a cathode active material represented by expression:
Li_{X}Co_{(1-Y)}Ti_{Y}O₂
wherein X and Y are defined as follows:$\text{0.9 ≦ X ≦ 1.3,}$$\text{0.1 ≦ Y ≦ 0.3}$ excluding the range of 0.9 ≦ X ≦ 1.0, Y = 0.1.

11. A nonaqueous electrolyte secondary battery comprising:
an anode containing lithium or lithium compound,
a nonaqueous electrolyte containing lithium compound, and,
a cathode having a cathode active material represented by expression:
Li_{X}Co_{(1-Y)}Nb_{Y}O₂
wherein X and Y are defined as follows:$\text{0.9 ≦ X ≦ 1.3,}$$\text{0.2 ≦ Y ≦ 0.3.}$

## Patentansprüche

1. Ein elektrischer Akkumulator mit nicht-wäßrigem Elektrolyt, umfassend:
eine Anode, welche Lithium oder eine Lithiumverbindung enthält, einen nicht-wäßrigen Elektrolyten, welcher eine Lithiumverbindung enthält, und
eine Kathode mit kathodenaktivem Material, dargestellt durch die Formel
Li_{X}Co_{(1-Y)}M_{Y}O₂
in welcher X und Y wie folgt definiert sind:$\text{0,85 ≦ X ≦ 1,3,}$$\text{0,05 ≦ Y ≦ 0,35,}$ wobei M ein Metall mindestens eines Elements, ausgewählt aus der Gruppe bestehend aus W, Ta, Ti und Nb, darstellt.

2. Ein elektrischer Akkumulator mit nicht-wäßrigem Elektrolyt nach Anspruch 1, in welcher das genannte Metall M Wolfram ist.

3. Ein elektrischer Akkumulator mit nicht-wäßrigem Elektrolyt, umfassend:
eine Anode, welche Lithium oder eine Lithiumverbindung enthält, einen nicht-wäßrigen Elektrolyten, welcher eine Lithiumverbindung enthält, und
eine Kathode mit kathodenaktivem Material, dargestellt durch die Formel:
Li_{X}Co_{(1-Y)}Mn_{Y}O₂
in welcher X und Y wie folgt definiert sind:$\text{0,85 ≦ X ≦ 1,3,}$$\text{0,05 ≦ Y ≦ 0,35,}$ wobei das kathodenaktive Material kleinere Gitterkonstanten aufweist als LiCoO₂.

4. Ein elektrischer Akkumulator mit nicht-wäßrigem Elektrolyt, nach Anspruch 1, in welcher das genannte Metall M Tantal ist.

5. Ein elektrischer Akkumulator mit nicht-wäßrigem Elektrolyt nach Anspruch 1, in welcher das genannte Metall M Titan ist.

6. Ein elektrischer Akkumulator mit nicht-wäßrigem Elektrolyt, nach Anspruch 1, in welcher das genannte Metall M Niobium ist.

7. Ein elektrischer Akkumulator mit nicht-wäßrigem Elektrolyt, umfassend:
eine Anode, welche Lithium oder eine Lithiumverbindung enthält, einen nicht-wäßrigen Elektrolyten, welcher eine Lithiumverbindung enthält, und
eine Kathode mit kathodenaktivem Material, dargestellt durch die Formel:
Li_{X}Co_{(1-Y)}W_{Y}O₂
in welcher X und Y wie folgt definiert sind:$\text{0,85 ≦ X ≦ 1,3,}$$\text{0,1 ≦ Y ≦ 0,3,}$ mit Ausnahme der Kombination$\text{X = 1,3, Y = 0,3.}$

8. Ein elektrischer Akkumulator mit nicht-wäßrigem Elektrolyt, umfassend:
eine Anode, welche Lithium oder eine Lithiumverbindung enthält, einen nicht-wäßrigen Elektrolyten, welcher eine Lithiumverbindung enthält, und
eine Kathode mit kathodenaktivem Material, dargestellt durch die Formel:
Li_{X}Co_{(1-Y)}Mn_{Y}O₂
in welcher X und Y wie folgt definiert sind:$\text{1,0 ≦ X ≦ 1,3,}$$\text{0,1 ≦ Y ≦ 0,3,}$ wobei besagtes kathodenaktives Material Gitterkonstanten aufweist, die kleiner sind als diejenigen von LiCoO2.

9. Ein elektrischer Akkumulator mit nicht-wäßrigem Elektrolyt, umfassend:
eine Anode, welche Lithium oder eine Lithiumverbindung enthält, einen nicht-wäßrigen Elektrolyten, welcher eine Lithiumverbindung enthält, und
eine Kathode mit kathodenaktivem Material, dargestellt durch die Formel:
Li_{X}Co_{(1-Y)}Ta_{Y}O₂
in welcher X und Y wie folgt definiert sind:$\text{1,0 ≦ X ≦ 1,3,}$$\text{0,1 ≦ Y ≦ 0,3.}$

10. Ein elektrischer Akkumulator mit nicht-wäßrigem Elektrolyt, umfassend:
eine Anode, welche Lithium oder eine Lithiumverbindung enthält, einen nicht-wäßrigen Elektrolyten, welcher eine Lithiumverbindung enthält, und
eine Kathode mit kathodenaktivem Material, dargestellt durch die Formel:
Li_{X}Co_{(1-y)}Ti_{Y}O₂
in welcher X und Y wie folgt definiert sind:$\text{0,9 ≦ X ≦ 1,3,}$$\text{0,1 ≦ Y ≦ 0,3,}$ mit Ausnahme des Bereichs$\text{0,9 < X< 1,0, Y = 0,1.}$

11. Ein elektrischer Akkumulator mit nicht-wäßrigem Elektrolyt, umfassend:
eine Anode, welche Lithium oder eine Lithiumverbindung enthält, einen nicht-wäßrigen Elektrolyten, welcher eine Lithiumverbindung enthält, und
eine Kathode mit kathodenaktivem Material, dargestellt durch die Formel:
Li_{X}Co_{(1-Y)}Nb_{Y}O₂
in welcher X und Y wie folgt definiert sind:$\text{0,9 ≦ X ≦ 1,3,}$$\text{0,2 ≦ Y ≦ 0,3.}$

## Revendications

1. Batterie secondaire à électrolyte non aqueux comprenant :
- une anode contenant du lithium ou un composé du lithium,
- un électrolyte non aqueux contenant un composé du lithium, et
- une cathode ayant une matière active de cathode représentée par l'expression :
Li_{X}Co_{(1-Y)}M_{Y}O₂
dans laquelle X et Y sont définis comme suit :$\text{0,85 ≦ X ≦ 1,3,}$$\text{0,05 ≦ Y ≦ 0,35,}$ où M est un métal d'au moins un élément choisi dans le groupe constitué de W, Ta, Ti et Nb.

2. Batterie secondaire à électrolyte non aqueux selon la revendication 1, dans laquelle:
- ledit métal M est W.

3. Batterie secondaire à électrolyte non aqueux comprenant :
- une anode contenant du lithium ou un composé du lithium,
- un électrolyte non aqueux contenant un composé du lithium, et
- une cathode ayant une matière active de cathode représentée par l'expression :
Li_{X}Co_{(1-Y)} Mn_{Y}O₂
dans laquelle X et Y sont définis comme suit :$\text{0,85 ≦ X ≦ 1,3,}$$\text{0,05 ≦ Y ≦ 0,35,}$ ladite matière active de cathode ayant des constantes de réseau plus petites que celles de LiCoO₂.

4. Batterie secondaire à électrolyte non aqueux selon la revendication 1, dans laquelle:
- ledit métal M est Ta.

5. Batterie secondaire à électrolyte non aqueux selon la revendication 1, dans laquelle:
- ledit métal M est Ti.

6. Batterie secondaire à électrolyte non aqueux selon la revendication 1, dans laquelle:
- ledit métal M est Nb.

7. Batterie secondaire à électrolyte non aqueux comprenant :
- une anode contenant du lithium ou un composé du lithium,
- un électrolyte non aqueux contenant un composé du lithium, et
- une cathode ayant une matière active de cathode représentée par l'expression :
Li_{X}Co_{(1-Y)}W_{Y}O₂
dans laquelle X et Y sont définis comme suit :$\text{0,85 ≦ X ≦ 1,3,}$$\text{0,1 ≦ Y ≦ 0,3,}$ excluant le point$\text{X = 1,3, Y = 0,3.}$

8. Batterie secondaire à électrolyte non aqueux comprenant :
- une anode contenant du lithium ou un composé du lithium,
- un électrolyte non aqueux contenant un composé du lithium, et
- une cathode ayant une matière active de cathode représentée par l'expression :
Li_{X}Co_{(1-Y)}Mn_{Y}O₂
dans laquelle X et Y sont définis comme suit :$\text{1,0 ≦ X ≦ 1,3,}$$\text{0,1 ≦ Y ≦ 0,3,}$ ladite matière active de cathode ayant des constantes de réseau plus petites que celles de LiCoO₂.

9. Batterie secondaire à électrolyte non aqueux comprenant :
- une anode contenant du lithium ou un composé du lithium,
- un électrolyte non aqueux contenant un composé du lithium, et
- une cathode ayant une matière active de cathode représentée par l'expression :
Li_{X}Co_{(1-Y)}Ta_{Y}O₂
dans laquelle X et Y sont définis comme suit :$\text{1,0 ≦ X ≦ 1,3,}$$\text{0,1 ≦ Y ≦ 0,3.}$

10. Batterie secondaire à électrolyte non aqueux comprenant :
- une anode contenant du lithium ou un composé du lithium,
- un électrolyte non aqueux contenant un composé du lithium, et
- une cathode ayant une matière active de cathode représentée par l'expression :
Li_{X}Co_{(1-Y)}Ti_{Y}O₂
dans laquelle X et Y sont définis comme suit :$\text{0,9 ≦ X ≦ 1,3,}$$\text{0,1 ≦ Y ≦ 0,3,}$ excluant la gamme 0,9 ≦ X ≦ 1,0, Y = 0,1.

11. Batterie secondaire à électrolyte non aqueux comprenant :
- une anode contenant du lithium ou un composé du lithium,
- un électrolyte non aqueux contenant un composé du lithium, et
- une cathode ayant une matière active de cathode représentée par l'expression :
Li_{X}Co_{(1-Y)}Nb_{Y}O₂
dans laquelle X et Y sont définis comme suit :$\text{0,9 ≦ X ≦ 1,3,}$$\text{0,2 ≦ Y ≦ 0,3.}$
